# EUROPEAN PATENT APPLICATION

(11) **EP 2 148 224 A1**
(43) Date of publication of application: **27.01.2010**
(21) Application number: 08160941.4
(22) Date of filing: 23.07.2008
(51) Int. Cl.: G01V 3/28

(54) **Determining earth properties**

(71) Applicant: Nederlandse Organisatie voor toegepast-natuurwetenschappelijk onderzoek TNO, 2628 VK Delft (NL)
(72) Inventor: Kunst, Peter Johan, 9728 XR Groningen (NL); Helmholt, Kristian Alexander, 9731 HJ Groningen (NL); Schmidt, Johann Richard, 2611 DC Delft (NL); Rijsdijk, Petrus Johannes Maria, 2353 PL Leiderdorp (NL)
(74) Representative: Hatzmann, Martin

(57) **Abstract**

A method of determining ground properties comprises the steps of transmitting magnetic waves through the ground from a first location (A) to a second location (B), comparing the magnetic waves received at the second location with the magnetic waves transmitted at the first location so as to determine the attenuation of the ground, and deriving the ground properties from the attenuation thus determined. The magnetic waves may be transmitted at multiple frequencies so as to determine a frequency dependency of the attenuation.

## Description

The present invention relates to determining earth properties. More in particular, the present invention relates to a system, a device and a method for determining properties of the ground, more in particular properties of the underground of fields and the underground of dykes, dams, bridges, buildings and other structures, and/or properties of earthen structures, such as dykes.

It is often desirable to determine properties of the ground, for example its moisture content, chemical composition, (underground) pressure, and other properties. One known method of determining the chemical composition is by taking samples of the ground and analysing the samples in a laboratory. This is quite time-consuming while the results are very local: they only pertain to the spots where the samples were taken. Similarly, using a thermometer to measure the temperature of the ground necessarily results in spot measurements.

It is further known to use radar to determine properties of the earth. Remote measurements can be carried out using radar equipment arranged in an airplane, while close range measurements may be performed using hand-held radar devices. Radar measurements may cover a larger area than the (manual) sampling methods discussed above while requiring significantly less time and labour.

As is well known, radar uses electro-magnetic waves which are capable of penetrating objects in their path. However, it has been found that the attenuation of radar waves in the ground is very high, thus severely limiting their effective range. Accordingly, while electro-magnetic waves are suitable for scanning the earth surface, they prove to be less suitable for determining underground properties of the earth. When earth properties have to be determined at some distance from the surface, for example a few metres below the surface, electro-magnetic waves are particularly unsuitable due to their high attenuation.

United States Patent US 4 363 137 discloses a data communication system utilizing magnetic induction which can be used for transmitting data in rock formations. A carrier modulated with the data is fed to the transmitting antenna to produce a magnetic induction field around a first point, while a receiving antenna is located at a second, remote point. This known system utilizes the fact that magnetic fields have a significantly lower attenuation in rock and other geological formations than electro-magnetic fields have. However, the magnetic fields of US 4 363 137 are solely used for data communication.

International Patent Application WO 2007/135434 discloses a magnetic near field RF communicator to enable inductive coupling with a magnetic field of an RF signal. A demodulator extracts modulation from an inductively coupled magnetic field. As in US 4 363 137 discussed above, the magnetic (near) field is only used for communication purposes.

It is an object of the present invention to overcome these and other problems of the Prior Art and to provide a system, a device and a method which allow earth properties to be determined quickly and economically, as when using radar, while achieving a significantly higher penetration of the earth formations.

Accordingly, the present invention provides a system for determining ground properties, the system comprising:
- at least one transmission unit for transmitting magnetic waves into the ground at a first location,
- at least one reception unit for receiving the transmitted magnetic waves at a second location,
- a comparison unit for comparing the received magnetic waves with the transmitted magnetic waves so as to determine the attenuation of the ground, and
- a derivation unit for deriving the ground properties from the determined attenuation.

By transmitting magnetic waves through the ground, instead of electro-magnetic waves, a much better penetration is achieved as the high attenuation of electro-magnetic waves is avoided. Still, the advantages of electro-magnetic waves are maintained: it is possible to determine the earth properties of a relatively large area quickly and economically. The present invention is therefore based upon the insight that magnetic waves can be used for determining earth properties. By using the advantageous characteristics of the magnetic field, in particular the magnetic near field, the disadvantages of conventional electro-magnetic fields, as used in radar, are avoided while retaining their advantages. Thus a system is obtained which is capable of determining ground properties quickly and economically.

As stated above, the derivation unit is arranged for deriving the ground properties from the determined attenuation, that is, from the attenuation determined by comparing the sent and received magnetic waves, or at least their respective power levels. To derive the ground properties, other factors may also be taken into consideration, in addition to the said attenuation. Accordingly, in an advantageous embodiment the derivation unit is arranged for additionally using the distance between the first location and the second location for deriving the ground properties. By using both the distance between the first and second locations and the attenuation of the trajectory between these locations, a relative attenuation (attenuation per metre) can be determined, which allows a more precise derivation of the earth properties. It is, of course, possible to involve further factors into the derivation of the ground properties, such as the (relative) depths at which the transmission and reception units are located.

In some embodiments, the comparison unit and the derivation unit may not be two distinct units but may be integrated into a single, combined unit. Such a combined unit may be constituted by a microprocessor with an associated memory.

Although the magnetic waves may be transmitted at a single frequency, the system of the present invention may further be arranged for transmitting the magnetic waves at two or more different frequencies. Using at least two frequencies has the advantage that any frequency dependency of the attenuation can be established and used to derive earth properties. This frequency dependency may, for example, be used to distinguish between materials and/or to determine the moisture content of the earth in the trajectory concerned.

In embodiments in which multiple frequencies are used, a first frequency may lie in a range of 10 kHz to 20 kHz, while a second frequency may lie in a range of 60 kHz to 80 kHz. However, the two frequencies may have other values, for example 50 kHz and 100 kHz respectively.

The system of the present invention may further comprise a communication unit for providing wireless communication with the at least one transmission unit and the at least one reception unit.

A transmission unit and a reception unit together define a trajectory of the magnetic waves. Multiple trajectories may be obtained if the system of the present invention comprises at least two reception units and preferably also at least two transmission units. Using a single transmission unit and two reception units already offers two trajectories which start in a common point. Multiple independent trajectories may be obtained by using multiple transmission units and a corresponding number of reception units.

In order to avoid the use of cables to connect the transmission and reception units, it is preferred that they are arranged as a wireless network, which may wirelessly communicate with each other and/or with the communication unit of the system. The transmission units and reception units may constitute nodes of the wireless network, while the communication unit may constitute a gateway.

The system according to the present invention may further comprise a control unit for controlling the at least one transmission unit, the comparison unit and the derivation unit. The control unit may comprise a microprocessor and an associated memory. In some embodiments, the control unit, the comparison unit and the derivation unit may constitute a single, integrated unit.

The present invention also provides a device for determining ground properties, comprising a comparison unit and a derivation unit as defined above. The device of the present invention may further comprise a communication unit, a control unit, an input/output unit and/or a display unit.

The present invention further provides a method of determining ground properties, the method comprising the steps of:
- transmitting magnetic waves through the ground from a first location to a second location,
- comparing the magnetic waves received at the second location with the magnetic waves transmitted at the first location so as to determine the attenuation of the ground, and
- deriving the ground properties from the attenuation.

The step of deriving ground properties may involve the distance between the first location and the second location. More than two locations and consequently more than one distance may be involved.

In an advantageous embodiment, the magnetic waves are transmitted at two or more different frequencies.

The present invention additionally provides a computer program product for carrying out the comparing and deriving steps of the method defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

The present invention will further be explained below with reference to exemplary embodiments illustrated in the accompanying drawings, in which:
Fig. 1 schematically shows an embodiment of a system for determining ground properties according to the present invention.
Fig. 2 schematically shows an embodiment of the central unit of the system according to the present invention.
Fig. 3 schematically shows an embodiment of a transmission circuit for use in the system of the present invention.
Fig. 4 schematically shows an embodiment of a reception circuit for use in the system of the present invention.

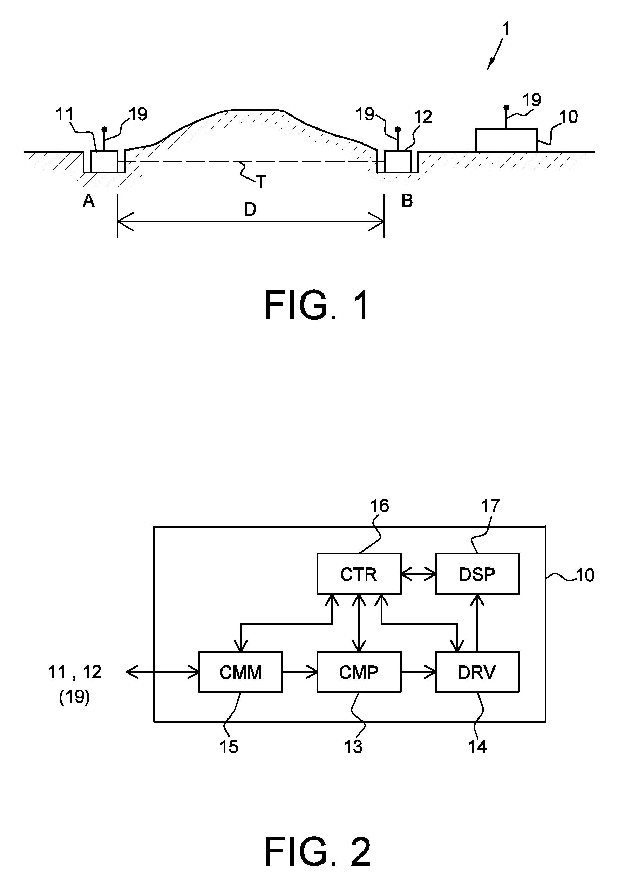

The system 1 shown merely by way of non-limiting example in Fig. 1 comprises a ground properties determination device 10, a transmission unit 11 and a reception unit 12. In the example shown, the device 10 and the units 11, 12 are capable of communicating via a wireless link, using antennas 19. In other embodiments, however, wired connections can be used. Although only a single transmission unit 11 and a single reception unit 12 are shown in Fig. 1, it will be understood that multiple transmission units 11 and/or multiple reception units 12 may be comprised in the system of the present invention.

The transmission unit 11 at location A and the reception unit 12 at location B define a trajectory T having a length D. In the example of Fig. 1 each unit is arranged in a hole in the ground, such that substantially the entire trajectory T extends through the ground. In other embodiments, the units can be arranged on the ground, or on an object to be monitored, such as a dyke or dam.

In accordance with the present invention, properties of the ground traversed by the trajectory T can be established by transmitting magnetic waves from the transmission unit 11 through the ground to the reception unit 12. By using the magnetic (near) field, rocks and other substances can be penetrated by the magnetic waves, in contrast to electro-magnetic waves (such as radar waves) which are strongly attenuated by rock and soil, and which therefore have very little penetration.

Of course the magnetic waves are also attenuated by the ground, but to a far lesser extent than electro-magnetic waves. The attenuation of the magnetic waves over the trajectory T can be determined by comparing emitted magnetic waves and the received magnetic waves, preferably by comparing the emitted and the received energy. The (wave amplitude or energy) difference is a measure of the attenuation of the trajectory. From the attenuation, properties of the ground can be derived. Such properties may be, for example, the type of material, the moisture content, the density, etc.

It is advantageous if both the attenuation and the distance D are taken into account when deriving the ground properties, as a longer distance will typically result in a proportionally higher attenuation. In preferred embodiments, therefore, a relative attenuation is determined by dividing the attenuation of the trajectory T by the distance D, resulting in an attenuation per unit of length (preferably in decibel per meter: dB/m).

The extent to which earth materials (rock, clay, sand, ...) contribute to the attenuation of the magnetic waves can be determined in advance using experimental arrangements. By comparing the attenuation (per unit of length or per trajectory) determined with the system of Fig. 1 with an experimentally determined attenuation (per unit of length or per trajectory), the type of material yielding the closest match can be determined. This material will typically be the dominant material of the trajectory concerned. Similarly, the moisture content of the ground may be derived.

Deriving the type of material of the ground and/or its properties may be carried out with greater precision by using multiple measurements: multiple trajectories and/or multiple frequencies.

Multiple trajectories can be obtained by using at least three units, for example a single transmission unit 11 and two (or more) reception units 12. Preferably, several pairs of units are used, each pair consisting of a transmission unit 11 and a reception unit 12, and each pair defining a separate trajectory T.

Multiple frequencies can be used to determine frequency-dependent properties of the ground. Preferably, two distinct frequencies are used, for example a first frequency of between 10 kHz and 20 kHz, and a second frequency of between 60 kHz and 80 kHz. It is preferred that the two frequencies are at least 10 kHz apart, more preferably at least 50 kHz, although smaller frequency spacings may also be used in certain circumstances.

It has been found that suitable frequencies of the magnetic waves range between 10 kHz and 100 kHz, although the present invention is not limited to said range and both higher and lower frequencies may be used.

The merely exemplary embodiment of a ground properties determination device 10 shown in Fig. 2 comprises a comparison (CMP) unit 13, a derivation (DRV) unit 14, a communication (CMM) unit 15, a control (CTR) unit 16 and a display (DSP) unit 17. Although the comparison unit 13, the derivation unit 14 and the control unit 16 are shown as separate units to illustrate their individual functions, they may be integrated in a single, combined unit comprising a microprocessor and an associated memory for storing data and suitable software programs for carrying out method steps according to the present invention.

The communication unit 15 is arranged for communicating with the transmission unit(s) 11 and the reception unit(s) 12 via the antennas 19.

The display unit 17 may be replaced with an input/output (I/O) unit for exchanging information with a (remote) server, for example. In some embodiments, both a display unit 17 and an input/output unit may be present.

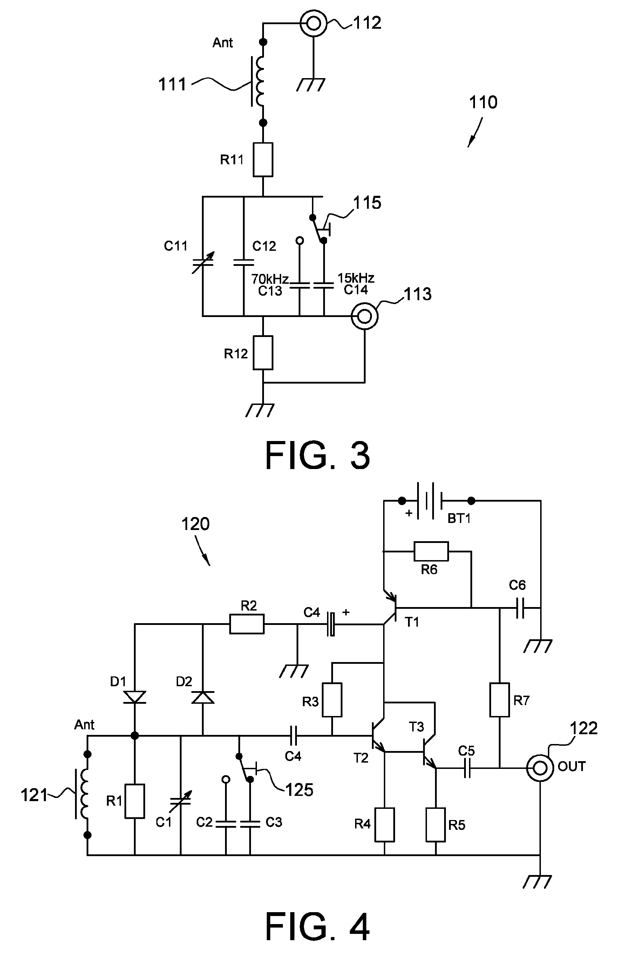

A merely exemplary transmission circuit for use in the transmission units 11 of the present invention is schematically illustrated in Fig. 3. The transmission circuit 110 of Fig. 3 comprises an antenna 111 for transmitting magnetic waves. The antenna 111 may comprise a ferrite bar having a length of approximately 15 cm, for example, and a coil arranged around the ferrite bar. The coil may have an inductance of approximately 2 mH, although other values are also possible and will depend on the transmission frequencies used.

An input terminal 112 receives the signal to be transmitted from the communication unit (15 in Fig. 2. A resistor R11 and capacitors C11, C12, C13 and C14 define a serial resonant circuit, where resistor R11 provides some attenuation. A switch 115 allows to engage either capacitor C13 or capacitor C14, thus selecting a transmission frequency of either 70 kHz (C13) or 15 kHz (C14). It will of course be understood that in most embodiments switch 115 will be constituted by an electronic switch, capable of quickly switching between capacitors C13 and C14. Resistor R12, which may, for example, have a value of 1 Ohm, may serve as a measuring resistor.

A merely exemplary reception circuit for use in the reception units 12 of the present invention is schematically illustrated in Fig. 4. The reception circuit 120 of Fig. 4 comprises an antenna 121 for receiving magnetic waves. The antenna 121 is preferably similar to the antenna 111 of the transmission circuit 110 of Fig. 3 and may also comprise a coil enclosing a ferrite bar (it will be understood that the core of the antenna may be made of other materials, typically but not exclusively metals). A switch 125 allows to select either capacitor C2 or capacitor C3 and thus to select a frequency (in the present example, either 70 kHz or 15 kHz). Two transistors T2 and T3 serve as an impedance converter, while transistor T1 serves to switch on the power supply (in conjunction with a resistor in the connecting cable of the power supply). An output terminal 122 serves to output the amplified signal.

The present invention is particularly useful for monitoring dykes, dams and roads, but may also be used in the fields of oil and gas exploration, ground pollution detection and monitoring, and other applications.

The present invention is based upon the insight that magnetic fields may not only be used for communication in rock and other earth formations, but also is suitable for measuring and determining properties of the earth. The present invention benefits from the further insight that magnetic waves have an excellent penetration of the earth.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A system (1) for determining ground properties, the system comprising:
• at least one transmission unit (11) for transmitting magnetic waves into the ground at a first location (A),
• at least one reception unit (12) for receiving the transmitted magnetic waves at a second location (B),
• a comparison unit (13) for comparing the received magnetic waves with the transmitted magnetic waves so as to determine the attenuation of the ground, and
• a derivation unit (14) for deriving the ground properties from the determined attenuation.

2. The system according to claim 1, wherein the derivation unit (14) is arranged for additionally using the distance (D) between the first location (A) and the second location (B) for deriving the ground properties.

3. The system according to claim 1 or 2, further arranged for transmitting the magnetic waves at two or more different frequencies.

4. The system according to claim 3, wherein a first frequency lies in a range of 10 kHz to 20 kHz and wherein a second frequency lies in a range of 60 kHz to 80 kHz.

5. The system according to any of the preceding claims, further comprising a communication unit (15) for providing wireless communication with the at least one transmission unit (11) and the at least one reception unit (12).

6. The system according to any of the preceding claims, comprising at least two reception units (12), and preferably also at least two transmission units (11).

7. The system according to claim 6, comprising at least two transmission units (11) and at least two reception units (12) arranged as a wireless network.

8. The system according to any of the preceding claims, further comprising a display unit (17) for displaying ground properties.

9. The system according to any of the preceding claims, further comprising a control unit (16) for controlling the at least one transmission unit (11), the comparison unit (13) and the derivation unit (14).

10. A device for determining ground properties for use in a system (1) according to any of the preceding claims, the device comprising:
• a comparison unit (13) for comparing received magnetic waves with transmitted magnetic waves so as to determine the attenuation of the ground, and
• a derivation unit (14) for deriving the ground properties from the determined attenuation.

11. A method of determining ground properties, the method comprising the steps of:
• transmitting magnetic waves through the ground (G) from a first location (A) to a second location (B),
• comparing the magnetic waves received at the second location (B) with the magnetic waves transmitted at the first location (A) so as to determine the attenuation of the ground, and
• deriving the ground properties from the attenuation.

12. The method according to claim 11, wherein the step of deriving ground properties involves the distance (D) between the first location (A) and the second location (B).

13. The method according to claim 11 or 12, wherein the magnetic waves are transmitted at two or more different frequencies.

14. The method according to claim 13, wherein a first frequency lies in a range of 10 kHz to 20 kHz and wherein a second frequency lies in a range of 60 kHz to 80 kHz.

15. A computer program product for carrying out the comparing and deriving steps of the method according to any of claims 11-14.
